# EUROPÄISCHE PATENTANMELDUNG

(11) **EP 4 406 771 A1**
(43) Veröffentlichungstag der Anmeldung: **31.07.2024**
(21) Anmeldenummer: 24152926.2
(22) Anmeldetag: 19.01.2024
(51) Int. Cl.: B60L 3/10, B60L 7/18, B60L 15/20, B60T 8/171, B60L 7/00, B60T 8/17, B60T 8/1761, B60T 8/1763

(54) **VERFAHREN ZUM STEUERN EINER ELEKTRODYNAMISCHEN BREMSE EINES SCHIENENFAHRZEUGS**

(30) Priorität: 27.01.2023 DE 102023200673
(71) Anmelder: Siemens Mobility GmbH, 81739 München (DE)
(72) Erfinder: Greilich, Murad, 91056 Erlangen (DE)
(74) Vertreter: Siemens Patent Attorneys

(57) **Zusammenfassung**

Das erfindungsgemäße Verfahren zum Steuern einer elektrodynamischen Bremse eines Schienenfahrzeugs, wobei die elektrodynamische Bremse zumindest einen Radsatz, einen den Radsatz antreibenden elektrischen Antriebsmotor, einen den Antriebsmotor steuernden Stromrichter sowie eine den Stromrichter steuernde Steuereinrichtung umfasst, umfasst zumindest die Schritte eines Steuerns des Stromrichters abhängig von einem vorgegebenen ersten Sollschlupf für den Radsatz, wobei der erste Sollschlupf abhängig von einer Geschwindigkeit des Schienenfahrzeugs definiert ist, eines Bestimmens eines Istschlupfes des Radsatzes, und Vergleichen des bestimmten Istschlupfes mit einem von dem vorgegebenen ersten Sollschlupf abhängigen Kriterium, und ist gekennzeichnet durch den weiteren Schritt des Steuerns, abhängig von einem Ergebnis des Vergleichs, des Stromrichters abhängig von einem zweiten Sollschlupf, wobei der zweite Sollschlupf innerhalb eines vorgegebenen Sollschlupfbereichs zeitlich variiert wird, wobei der Sollschlupfbereich durch obere und untere Grenzwerte für den Sollschlupf definiert ist und wobei die oberen und unteren Grenzwerte jeweils abhängig von der Geschwindigkeit des Schienenfahrzeugs definiert sind.

## Beschreibung

Die Erfindung betrifft ein Verfahren zum Steuern einer elektrodynamischen Bremse eines Schienenfahrzeugs, eine elektrodynamische Bremse sowie ein Schienenfahrzeug mit zumindest einer solchen elektrodynamischen Bremse.

Bei elektrisch angetriebenen Schienenfahrzeugen, beispielsweise Triebzügen für den Nah-, Regional- und Fernverkehr sowie Lokomotiven, wird angestrebt, diese überwiegend bzw. nahezu exklusiv mittels der elektrodynamischen Bremse zu bremsen. Diese besitzt gegenüber einer Reibungsbremse insbesondere den Vorteil, dass sie verschleißfrei ist sowie kinetische Energie des Schienenfahrzeugs in elektrische Energie zurückwandeln und diese, entsprechend einer regenerativen Bremse, in ein Versorgungsnetz oder einen elektrischen Energiespeicher des Schienenfahrzeugs speisen kann.

Die elektrodynamische Bremse als Teil des Antriebssystems eines Schienenfahrzeugs umfasst vorzugsweise alle Antriebsmotoren, welche beispielsweise jeweils einen Radsatz antreiben. Die Antriebsmotoren sind üblicherweise als Drehstrommaschinen ausgestaltet, deren jeweilige Wicklung bzw. Wicklungen von Stromrichtern mit einem Dreiphasen-Wechselstrom variabler Spannung und Frequenz gespeist werden. Die Stromrichter umfassen elektrische Schaltelemente, welche entsprechend einem gewünschten Antriebs- oder Bremsmoment der Antriebsmotoren angesteuert werden. Die Ansteuerung der Schaltelemente eines Stromrichters erfolgt durch eine elektronische Steuereinrichtung, welche beispielsweise als Antriebssteuergerät (ASG) bezeichnet wird. Jedem Stromrichter ist üblicherweise ein Antriebssteuergerät zugeordnet, wobei das bzw. die Antriebssteuergeräte wiederum von einer übergeordneten Steuereinrichtung des Schienenfahrzeugs, welche beispielsweise als zentrales Steuergerät (ZSG) bezeichnet wird, gesteuert werden. Das zentrale Steuergerät gibt insbesondere Sollwerte für eine Beschleunigung bzw. Verzögerung des Schienenfahrzeugs vor, aus welchen die Antriebssteuergeräte eine erforderliche Ansteuerung der Stromrichter bzw. deren Schaltelemente für die Erzeugung eines entsprechenden Antriebs- bzw. Bremsmoments ableiten. Ein jeweiliger Stromrichter speist beispielsweise zwei gemeinsam in einem Drehgestell angeordnete Antriebsmotoren, wenn diese als Asynchronmaschinen ausgestaltet sind. Sofern die Antriebsmotoren als Synchronmaschinen, insbesondere permanentmagneterregte Synchronmaschinen, ausgestaltet sind, speist jeder Stromrichter nur jeweils einen Antriebsmotor.

Eine besondere Herausforderung besteht bei Schienenfahrzeugen in der Übertragung des mittels des Antriebsmotors erzeugten Bremsmoments bzw. der Bremskraft über den Rad/Schiene-Kontakt. Die Kraftübertragung zwischen Rad und Schiene wird mittels der so genannten Kraftschluss-Schlupf-Funktion beschrieben, wobei ein Kraftschlussbeiwert als Quotient aus dem Verhältnis einer bei rollendem Kontakt am Rad wirkenden Tangentialkraft und der Normalkraft am Radaufstandspunkt gebildet wird. Eine wesentliche Größe des Kraftschlusses ist der während eines Bremsvorgangs aufgrund einer Differenzgeschwindigkeit zwischen Rad und Schiene entstehende Schlupf. Der Schlupf ist als Quotient aus der Differenzgeschwindigkeit und einer Referenzgeschwindigkeit definiert, wobei als Referenzgeschwindigkeit beispielsweise die Geschwindigkeit des Schienenfahrzeugs in Fahrtrichtung gewählt wird. Bei einem Bremsvorgang ist der Schlupf negativ und erreicht bei einem Blockieren bzw. Gleiten des Rads den Wert von minus eins. Mit zunehmenden Schlupf und konstanter Normalkraft nimmt der Kraftschlussbeiwert und damit die Tangentialkraft bis zu einem Maximum zu und fällt anschließend mit weiter zunehmenden Schlupf langsam wieder ab. Speziell in dem abfallenden Bereich kann es aufgrund eines zu hohen Bremsmoments bzw. eines niedrigen Kraftschlusses zu einem Gleiten des Rads kommen sowie gegebenenfalls zu einem Entstehen von Flachstellen an dessen Lauffläche.

Zum Verhindern eines länger andauernden Gleitens sowie zum Sicherstellen eines stabilen und verlässlichen Bremsvorgangs unter verschiedenen möglichen Umweltbedingungen werden Schienenfahrzeuge mit Gleitschutzeinrichtungen bzw. einem Gleitschutzsystem ausgestattet. Die europäische Norm EN 15595 "Bahnanwendungen - Bremse - Gleitschutz", Fassung Juli 2021, definiert Kriterien für die Zulassung und Typprüfung eines solchen Gleitschutzsystems. Nach der Einleitung dieser Norm ist ein Gleitschutzsystem ausgelegt, durch kontrollierte Reduzierung und Wiederaufbau der Bremskraft den verfügbaren Kraftschluss bestmöglich auszunutzen bzw. den Kraftschluss zu erhöhen, um Radsatzblockierungen und unkontrolliertes Gleiten des Rades infolge niedrigen Kraftschlusses zu verhindern. Ein Gleitschutzsystem kann dabei neben der Reibungsbremse ebenso die elektrodynamische Bremse des Schienenfahrzeugs umfassen, wobei nach Kap. 5.1.3.2 der Norm ein Gleitschutzsystem für die elektrodynamische Bremse bereitgestellt werden muss, wenn diese auch für Schnellbremsanwendungen eingesetzt werden soll. Sofern für die elektrodynamische Bremse kein Gleitschutzsystem vorgesehen ist, muss sie bei auftretendem erhöhten Schlupf abschalten, wodurch die Vorteile der elektrodynamischen Bremse gegenüber der Reibungsbremse bis zum Abschluss des Bremsvorgangs nachteilig nicht mehr erzielt werden können.

Weitere Rahmenbedingungen für Bremsen von Schienenfahrzeugen sind insbesondere in der Verordnung Nr. 1302/2014 der Europäischen Kommission, veröffentlicht im Amtsblatt L356/276 der Europäischen Union vom 12.12.2014, definiert. Darin befasst sich Kap. 4.2.4 "Bremsen" sowie speziell dessen Unterkapitel 4.2.4.6 "Rad-Schiene-Kraftschluss - Gleitschutzsysteme" mit Grenzwerten für den Rad-Schiene-Kraftschluss, welche abhängig von der Geschwindigkeit sowie der Anzahl Radsätze des Schienenfahrzeugs definiert sind.

Ergänzend sind in der europäischen Norm EN 14478 "Bahnanwendungen - Bremsen - Fachbegriffe", Fassung Februar 2018, insbesondere in Kap. 4.7 "Arten und Merkmale von Bremsen" sowie in Kap. 4.11 "Gleitschutz" Fachbegriffe im Zusammenhang mit Bremsen von Schienenfahrzeugen definiert.

Ein Gleitschutzsystem für die elektrodynamische Bremse des Schienenfahrzeugs wird üblicherweise in dem jeweiligen Antriebssteuergerät verwirklicht und bewirkt eine Ansteuerung der Schaltelemente des jeweiligen Stromrichters. Obwohl das Gleitschutzsystem nach den vorstehenden Definitionen dafür auszulegen ist, den verfügbaren Kraftschluss bestmöglich auszunutzen, kann es dynamische Änderungen der Bedingungen des Rad/Schiene-Kontakts nicht berücksichtigen. Dies gilt ebenso für einen Sollwert für den Schlupf, welcher unter Annahme einer bestimmten Kraftschluss-Schlupf-Funktion und unter Einhaltung vorgegebener geschwindigkeitsabhängiger Grenzwerte für den Kraftschluss von dem jeweiligen Antriebssteuergerät gewählt bzw. definiert wird, das abhängig von diesem Sollschlupf die Schaltelemente des jeweiligen Stromrichters während des Bremsvorgangs ansteuert.

Die Wahl eines als optimal erachteten Sollwerts für den Schlupf hat jedoch aufgrund sich während des Bremsvorgangs verändernden Bedingungen des Rad/Schiene-Kontakts, welche auch zwischen Radsätzen des Schienenfahrzeugs variieren können, häufig zur Folge, dass ein möglicher maximaler Kraftschluss nicht ausgenutzt wird, da dieser beispielsweise erst bei einem höheren als dem durch den gewählten Sollwert hervorgerufenen tatsächlichen Istwert des Schlupfes liegt, der Kraftschluss also in dem ansteigenden Bereich links des Kraftschluss-Maximums der tatsächlichen Kraftschluss-Schlupf-Funktion liegt, oder dass der Gleitschutz aktiviert wird, da der durch den gewählte Sollwert hervorgerufene tatsächliche Istwert des Schlupfes höher als der Schlupf des maximal möglichen Kraftschlusses ist, der Kraftschluss also in dem absteigenden Bereich rechts des Kraftschluss-Maximums der Kraftschluss-Schlupf-Funktion liegt, in welchem ein Gleiten auftreten kann. In beiden beispielhaften Fällen führt die mangelnde Nutzung des bei den tatsächlich vorherrschenden Bedingungen des Rad/Schiene-Kontakts maximal möglichen Kraftschlusses, welcher gegebenenfalls von einem vorgegebenen Grenzwert begrenzt ist, nachteilig zu einer Verlängerung der für den Bremsvorgang benötigten Strecke.

Aufgabe der Erfindung ist es daher, ein Verfahren zum Steuern einer elektrodynamischen Bremse eines Schienenfahrzeugs anzugeben, mittels welchem durch erhöhte Nutzung des möglichen Kraftschlusses eine Verkürzung eines Bremsvorgangs erzielt werden kann.

Diese Aufgabe wird durch das Verfahren mit den Merkmalen des unabhängigen Patentanspruchs 1 gelöst. Weiterbildungen des Verfahrens sind in abhängigen Patentansprüchen angegeben. Die Aufgabe wird ferner durch eine elektrodynamische Bremse für ein Schienenfahrzeug sowie ein Schienenfahrzeug mit den jeweiligen Merkmalen der weiteren unabhängigen Patentansprüche gelöst.

Das erfindungsgemäße Verfahren zum Steuern einer elektrodynamischen Bremse eines Schienenfahrzeugs, wobei die elektrodynamische Bremse zumindest einen Radsatz, einen den Radsatz antreibenden elektrischen Antriebsmotor, einen den Antriebsmotor steuernden Stromrichter sowie eine den Stromrichter steuernde Steuereinrichtung umfasst, umfasst zumindest die Schritte eines Steuerns des Stromrichters abhängig von einem vorgegebenen ersten Sollschlupf für den Radsatz, wobei der erste Sollschlupf abhängig von einer Geschwindigkeit des Schienenfahrzeugs definiert ist, eines Bestimmens eines Istschlupfes des Radsatzes, und Vergleichen des bestimmten Istschlupfes mit einem von dem vorgegebenen ersten Sollschlupf abhängigen Kriterium, und ist gekennzeichnet durch den weiteren Schritt des Steuerns, abhängig von einem Ergebnis des Vergleichs, des Stromrichters abhängig von einem zweiten Sollschlupf, wobei der zweite Sollschlupf innerhalb eines vorgegebenen Sollschlupfbereichs zeitlich variiert wird, wobei der Sollschlupfbereich durch obere und untere Grenzwerte für den Sollschlupf definiert ist und wobei die oberen und unteren Grenzwerte jeweils abhängig von der Geschwindigkeit des Schienenfahrzeugs definiert sind.

Nach der Erfindung beginnt ein Bremsvorgang mittels der elektrodynamischen Bremse des Schienenfahrzeugs beispielsweise zunächst in bekannter Weise unter Verwendung einer vorgegebenen so genannten Sollschlupfkennlinie, welche den ersten Sollschlupf abhängig von einer Geschwindigkeit des Schienenfahrzeugs definiert und beispielsweise in einer Speichereinrichtung der Steuereinrichtung gespeichert ist. Abhängig von der aktuellen Geschwindigkeit des Schienenfahrzeugs wird von der Steuereinrichtung ein zu der aktuellen Geschwindigkeit korrespondierender erster Sollschlupf gewählt und abhängig von diesem die Schaltelemente des Stromrichters angesteuert, um ein gewünschtes jeweiliges Bremsmoment durch den einen oder die mehreren von dem Stromrichter gesteuerten Antriebsmotoren zu erzeugen. Wird während des Bremsvorgangs aus einem Vergleich des gewählten ersten Sollschlupfes mit einem bestimmten Istschlupf festgestellt, dass diese beispielsweise über ein bestimmtes Maß und/oder über einen bestimmten Zeitraum deutlich voneinander differieren, der bestimmte Istschlupf beispielsweise aufgrund eines zu hohen Bremsmoments den gewählten ersten Sollschlupf deutlich übersteigt, so wählt die Steuereinrichtung den zweiten Sollschlupf, um anschließend abhängig von diesem zweiten Sollschlupf die Schaltelemente des Stromrichters anzusteuern.

Im Unterschied zu dem ersten Sollschlupf ist der zweite Sollschlupf dabei kein fest vorgegebener Wert, sondern ein innerhalb eines vorgegebenen Sollschlupfbereichs zeitlich variierender Wert. Während der erste Sollschlupf durch die Sollschlupfkennlinie beschrieben wird, welche zu jeder Geschwindigkeit des Schienenfahrzeugs einen Wert für den Sollschlupf definiert, kann der zweite Sollschlupf somit verschiedene Werte innerhalb des Sollschlupfbereichs annehmen, wobei dieser für jede Geschwindigkeit des Schienenfahrzeugs durch einen oberen und einen unteren Grenzwert für den Sollschlupf definiert ist. Der Sollschlupfbereich bzw. dessen oberen und unteren Grenzwerte sind beispielsweise wiederum in einer Speichereinrichtung der Steuereinrichtung gespeichert.

Der erfindungsgemäße Sollschlupfbereich sowie die zeitliche Variation des zweiten Sollschlupfes innerhalb dieses Bereichs, wodurch entsprechend das Bremsmoment variiert wird, erhöht vorteilhaft die Wahrscheinlichkeit einer Annäherung des durch den Wert des zweiten Sollschlupfes hervorgerufenen Istschlupfes an den zu dem Kraftschluss-Maximum korrespondierenden Schlupf bei den tatsächlich vorherrschenden Bedingungen des Rad/Schiene-Kontakts. Durch Ausnutzung eines höheren Kraftschlusses kann der Bremsvorgang trotz gegebenenfalls starker Abweichungen der tatsächlichen Bedingungen des Rad/Schiene-Kontakts von den der Sollschlupfkennlinie zugrundeliegenden Bedingungen vorteilhaft verkürzt werden.

Wie einleitend erläutert repräsentiert der Schlupf eine Differenzgeschwindigkeit zwischen einer Translationsgeschwindigkeit des Schienenfahrzeugs und einer Rotationsgeschwindigkeit des gebremsten Rads am Aufstandspunkt und wird vorzugsweise als ein Geschwindigkeitswert in der Einheit Meter pro Sekunde (m/s) oder Kilometer pro Stunde (km/h) angegeben. Die Translationsgeschwindigkeit des Schienenfahrzeugs ist vorzugsweise die aktuelle Geschwindigkeit des gesamten Schienenfahrzeugs, welche entsprechend für alle Radsätze bzw. alle Steuereinrichtungen der elektrodynamischen Bremse gilt. Die aktuelle Geschwindigkeit kann beispielsweise aus einer mittels Drehzahlgebern ermittelten Geschwindigkeit eines oder mehrerer nicht angetriebener Radsätze abgeleitet werden sowie alternativ oder ergänzend von beispielsweise Satelliten oder Radarsensoren gestützten Einrichtungen des Schienenfahrzeugs bereitgestellt werden. Der Istschlupf kann beispielsweise von der jeweiligen Steuereinrichtung auf Basis der bereitgestellten aktuellen Geschwindigkeit des Schienenfahrzeugs und der aus beispielsweise mittels eines oder mehrerer Drehzahlgeber bestimmten ermittelten Geschwindigkeit des mittels des angesteuerten Antriebsmotors gebremsten Radsatzes bestimmt werden.

Der den Antriebsmotor bzw. die mehreren Antriebsmotoren ansteuernde Stromrichter ist beispielsweise als ein Pulswechselrichter (PWR) ausgestaltet, welcher einen eingangsseitigen Gleichstrom eines Gleichspannungszwischenkreises in einen ausgangsseitigen Dreiphasen-Wechselstrom variabler Spannungshöhe und Frequenz wandelt, mit welchem die Wicklung bzw. Wicklungen des Antriebsmotors gespeist werden. Die Wandlung erfolgt dabei mittels von der Steuereinrichtung gesteuerter elektronischer Schaltelemente wie beispielsweise MOSFET (Metal Oxide Semiconductor Field-Effect Transistor) oder IGBT (Insulated-Gate Bipolar Transistor).

Nach einer Weiterbildung des Verfahrens werden die oberen und unteren Grenzwerte des Sollschlupfbereichs derart gewählt, dass sie jeweils einen höheren Schlupf als der erste Sollschlupf definieren.

Der zweite Sollschlupf wird nach dieser Weiterbildung in einem Sollschlupfbereich variiert, dessen Werte alle höher als der Wert des ersten Sollschlupfes bei der entsprechenden Geschwindigkeit des Schienenfahrzeugs sind. Es wird somit ein höherer Schlupf als nach der vorgegebenen Sollschlupfkennlinie zugelassen, welcher potenziell besser an tatsächlichen Bedingungen des Rad/Schiene-Kontakts angepasst ist und damit einen höheren Kraftschluss für die Übertragung des Bremsmoments ermöglicht.

Nach einer weiteren Weiterbildung des Verfahrens werden die oberen und unteren Grenzwerte des Sollschlupfbereichs derart gewählt, dass sie zumindest in einem bestimmten Geschwindigkeitsbereich jeweils proportional zu der Geschwindigkeit des Schienenfahrzeugs sind.

Beispielsweise können die oberen und unteren Grenzwerte jeweils einem prozentualen Anteil der Geschwindigkeit des Schienenfahrzeugs entsprechen, wobei die unteren Grenzwerte beispielsweise bei 20 Prozent, die oberen Grenzwerte hingegen bei 30 Prozent der Geschwindigkeit liegen. Für eine beispielhafte Geschwindigkeit des Schienenfahrzeugs von 100 km/h liegt der obere Grenzwert somit bei einem Sollschlupf bzw. einer Differenzgeschwindigkeit von 30 km/h und der untere Grenzwert bei einem Sollschlupf bzw. einer Differenzgeschwindigkeit von 20 km/h. Demgegenüber liegen die Werte der Sollschlupfkennlinie beispielsweise im Bereich um zehn Prozent der Geschwindigkeit des Schienenfahrzeugs, bei der beispielhaften Geschwindigkeit von 100 km/h somit im Bereich um 10 km/h.

Insbesondere bei der Definition der oberen Grenzwerte sind von Normen vorgegebene Grenzwerte zu beachten. So ist beispielsweise in der einleitend genannten europäischen Norm EN 15595 "Bahnanwendungen - Bremse - Gleitschutz", Fassung Juli 2021, speziell Kap. 5.4.3.1 "Schlupf-Grenzwerte von Radsätzen mit niedrigem Kraftschluss" definiert, dass der Absolut-Schlupf, nach Kap. 3.1.4 dieser Norm die Differenz zwischen der tatsächlichen Zuggeschwindigkeit und der Umfanggeschwindigkeit des Rads, für eine Zeitspanne von drei Sekunden bei einer Geschwindigkeit des Schienenfahrzeugs zwischen 30 km/h und 120 km/h nicht mehr als 30 km/h, bei einer Geschwindigkeit zwischen 120 km/h bis 160 km/h nicht mehr als 25 Prozent, und bei einer Geschwindigkeit über 160 km/h nicht mehr als 40 km/h betragen darf. Bei Geschwindigkeiten über 200 km/h darf zudem kein Absolut-Schlupf von mehr als 40 km/h für eine Zeitspannung von fünf Sekunden bestehen.

Für den beispielhaften oberen Grenzwert von 30 Prozent bedeuten diese normseitig vorgegebenen Grenzwerte, dass der obere Grenzwert ab einer Geschwindigkeit von 100 km/h höchsten dem jeweils vorgegebenen Grenzwert entsprechen kann. Somit kann der obere Grenzwert des Sollschlupfbereichs in dem Geschwindigkeitsbereich bis 100 km/h durchaus 30 Prozent der Geschwindigkeit und damit proportional zu der Geschwindigkeit sein, in dem Geschwindigkeitsbereich zwischen 100 km/h und 120 km/h die von der Norm vorgegebene Grenze von 30 km/h jedoch nicht überschreiten, und ab einer Geschwindigkeit von 120 km/h maximal 25 Prozent der Geschwindigkeit betragen.

Nach einer weiteren Weiterbildung des Verfahrens wird der zweite Sollschlupf periodisch variiert, insbesondere mit einer Frequenz zwischen einschließlich 0.1 Hz und einschließlich 10 Hz.

Die Frequenz der Variation des Sollschlupfwertes kann sich dabei vorzugsweise an der Frequenz, mit welcher eine Änderung des Antriebs- und Bremsmoments durch die Ansteuerung der Schaltelemente des Stromrichters umgesetzt wird, orientieren. Ferner sollte die Frequenz derart gewählt werden, dass beispielsweise im Gleis angeordnete Einrichtungen beeinflussende Störströme vermieden werden.

Nach einer auf der vorstehenden Weiterbildung basierenden weiteren Weiterbildung des Verfahrens wird der zweite Sollschlupf sinusförmig variiert.

Eine sinusförmige Variation des zweiten Sollschlupfes innerhalb des vorgegebenen Sollschlupfbereichs besitzt gegenüber anderen möglichen Wellenformen wie Dreieck, Rechteck oder Trapez den Vorteil, dass abrupte Änderungen des Bremsmoments vermieden werden sowie der Istschlupf über einen längeren Zeitraum im Bereich des Kraftschluss-Maximums liegen kann.

Eine erfindungsgemäße elektrodynamische Bremse für ein Schienenfahrzeug umfassend zumindest einen Radsatz, einen den Radsatz antreibenden elektrischen Antriebsmotor, einen den Antriebsmotor steuernden Stromrichter sowie eine den Stromrichter steuernde Steuereinrichtung ist ausgestaltet, den Stromrichter abhängig von einem vorgegebenen ersten Sollschlupf für den Radsatz zu steuern, wobei der erste Sollschlupf abhängig von einer Geschwindigkeit des Schienenfahrzeugs definiert ist, einen Istschlupf des Radsatzes zu bestimmen, und den bestimmten Istschlupf mit einem von dem vorgegebenen ersten Sollschlupf abhängigen Kriterium zu vergleichen, und ist dadurch gekennzeichnet, dass die Steuereinrichtung ausgestaltet ist, abhängig von einem Ergebnis des Vergleichs, den Stromrichter abhängig von einem zweiten Sollschlupf zu steuern, wobei die Steuereinrichtung den zweiten Sollschlupf innerhalb eines vorgegebenen Sollschlupfbereichs zeitlich variiert, wobei der Sollschlupfbereich durch obere und untere Grenzwerte für den Sollschlupf definiert ist und wobei die oberen und unteren Grenzwerte jeweils abhängig von der Geschwindigkeit des Schienenfahrzeugs definiert sind.

Nach einer Weiterbildung der elektrodynamischen Bremse ist die Steuereinrichtung ferner ausgestaltet, den zweiten Sollschlupf periodisch zu variieren, insbesondere mit einer Frequenz zwischen einschließlich 0.1 Hz und einschließlich 10 Hz.

Nach einer auf der vorstehenden Weiterbildung basierenden weiteren Weiterbildung ist die Steuereinrichtung ferner ausgestaltet ist, den zweiten Sollschlupf sinusförmig zu variieren.

Ein erfindungsgemäßen Schienenfahrzeug umfasst zumindest eine erfindungsgemäße elektrodynamische Bremse.

Nach einer Weiterbildung des Schienenfahrzeugs ist dieses als ein Triebzug für die Personenbeförderung in einem Nahverkehr, Regionalverkehr oder Fernverkehr oder als eine Lokomotive ausgestaltet.

Die elektrodynamische Bremse kann vorteilhaft in einem Schienenfahrzeug, insbesondere in einem Triebzug für die Personenbeförderung oder einer Lokomotive, Verwendung finden.

Die Erfindung wird nachfolgend anhand von Ausführungsbeispielen erläutert. Dabei zeigen
- FIG 1: ein Schienenfahrzeug mit einer ersten Ausgestaltung eines Antriebssystems,
- FIG 2: ein Schienenfahrzeug mit einer alternativen zweiten Ausgestaltung eines Antriebssystems,
- FIG 3: ein Diagramm mit einer Sollschlupfkennlinie und Grenzwerten über der Geschwindigkeit eines Schienenfahrzeugs, und
- FIG 4: ein Ablaufdiagramm eines Bremsvorgangs mittels der elektrodynamischen Bremsen des Schienenfahrzeugs.

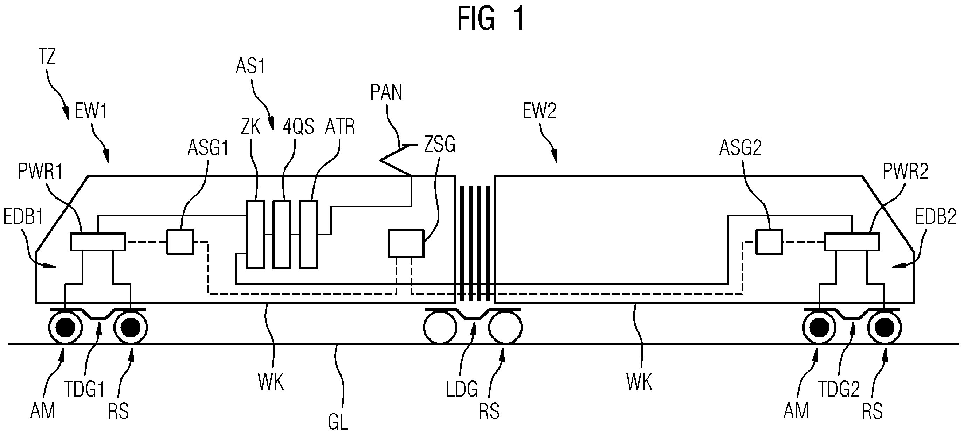

FIG 1 zeigt schematisch ein beispielhaft als ein Triebzug TZ für die Personenbeförderung ausgestaltetes Schienenfahrzeug. Der Triebzug TZ umfasst zwei Wagen, die als ein erster bzw. zweiter Endwagen EW1, EW2 ausgestaltet sind. Die Endwagen EW1, EW2 bzw. deren Fahrgasträume sind über einen Übergang miteinander verbunden. Die Wagenkästen WK der Endwagen EW1, EW2 stützen sich über gesamt drei Drehgestelle auf einem Gleis GL ab, wobei die beiden Enddrehstelle als Triebdrehgestelle TDG1, TDG2 jeweils zwei von einem jeweiligen Antriebsmotor AM angetriebene Radsätze RS umfassen und wobei das mittlere gemeinsame Drehgestell der beiden Endwagen EW1, EW2 als ein Laufdrehgestell LDG mit zwei nicht angetriebenen Radsätzen RS ausgestaltet sind.

Über die gesamt vier Antriebsmotoren AM hinaus umfasst das Antriebssystem AS1 des Triebzugs TZ beispielhaft einen Transformator ATR, dessen Primärwicklung über einen Stromabnehmer PAN mit einer nicht dargestellten Oberleitung eines Versorgungsnetzes verbunden ist. Die Oberleitung führt beispielsweise eine Einphasen-Wechselspannung von 15 kV, 16 2/3 Hz, oder 25 kV, 50 Hz. Eine oder mehrere Sekundärwicklungen des Transformators ATR sind mit einem oder mehreren netzseitigen Stromrichtern, beispielsweise Vierquadrantenstellern 4QS, verbunden, welche die von dem Transformator ATR bereitgestellte Wechselspannung in eine Gleichspannung für einen Gleichspannungszwischenkreis ZK wandeln. Alternativ zu einer Versorgung des Antriebssystems AS1 mit einer Wechselspannung ist ebenso eine Versorgung mit einer Gleichspannung von beispielsweise 1.5 kV oder 3 kV möglich, wobei in diesem Fall der Gleichspannungszwischenkreis ZK direkt oder über einen Gleichspannungssteller mit dem Versorgungsnetz verbunden werden kann. Auch kann der Gleichspannungszwischenkreis ZK beispielsweise mit einer oder mehreren Antriebsbatterien des Schienenfahrzeugs verbunden sein, welche den Gleichspannungszwischenkreis ZK speisen bzw. aus diesem geladen werden.

Mit dem Gleichspannungszwischenkreis ZK sind ebenfalls zwei lastseitige Stromrichter, beispielsweise Pulswechselrichter PWR1, PWR2, verbunden, welche die Gleichspannung des Gleichspannungszwischenkreises ZK jeweils in eine Wechselspannung variabler Höhe und Frequenz wandeln, mit der sie jeweils zwei Antriebsmotoren AM speisen. Gesteuert werden die lastseitigen Stromrichter PWR1, PWR2 bzw. deren jeweiligen Leistungshalbleiter-Schaltelemente jeweils von einer Steuereinrichtung, beispielsweise einem jeweiligen Antriebssteuergerät ASG1, ASG2. Die Antriebssteuergeräte ASG1, ASG2 werden wiederum über geeignete Signalleitungen von einer zentralen Steuereinrichtung, beispielsweise einem zentralen Steuergerät (ZSG), abhängig beispielsweise von Anforderungen einer fahrzeugführenden Person gesteuert.

Die Antriebsmotoren AM, lastseitigen Stromrichter PWR1, PWR2, Steuereinrichtungen ASG1, ASG2 sowie zumindest der Gleichspannungszwischenkreis ZK des Antriebssystems AS1 verwirklichen neben der Funktion des Antreibens auch die Funktion elektrodynamischer Bremsen EDB1, EDB2 des Triebzugs TZ. Bei einer elektrodynamischen Bremsung werden die Antriebsmotoren AM als Generatoren betrieben, wobei deren erzeugtes Bremsmoment insbesondere mittels einer geeigneten Ansteuerung der jeweiligen Schaltelemente der Stromrichter PRW1, PRW2 durch die Steuereinrichtungen ASG1, ASG2 gesteuert werden kann. Die bei der elektrodynamischen Bremsung von den Antriebsmotoren AM generierte elektrische Energie kann beispielsweise in das Versorgungsnetz zurückgespeist werden, dem Laden von Antriebsbatterien dienen und/oder in Bremswiderständen in Wärme gewandelt werden. Neben den elektrodynamischen Bremsen kann der Triebzug TZ ergänzend bekannte Reibungsbremsen aufweisen.

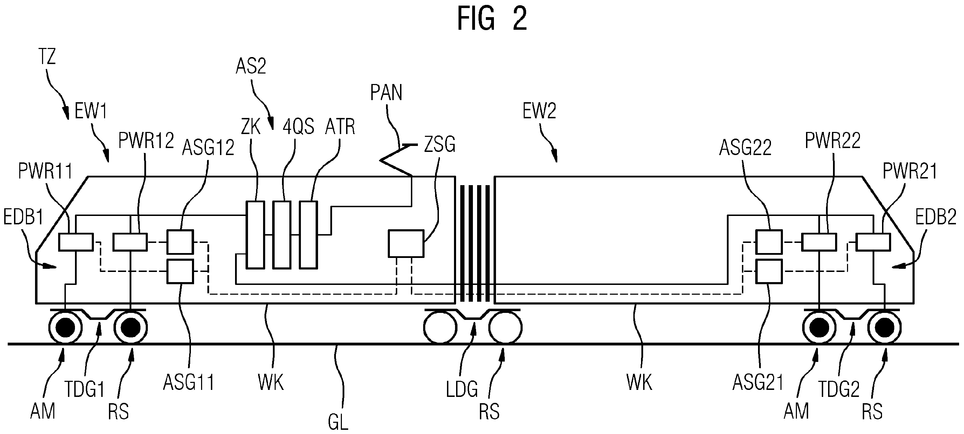

FIG 2 zeigt schematisch einen Triebzug TZ entsprechend dem der FIG 1 mit einer alternativen Ausgestaltung des Antriebssystems AS2. Im Unterschied zu dem Antriebssystem AS1 der FIG 1 ist den vier Antriebsmotoren AM, welche beispielsweise jeweils als permanentmagneterregte Synchronmaschinen ausgestaltet sind, jeweils ein lastseitiger Stromrichter PWR11, PWR12, PWR21, PWR22 zugeordnet. Die Stromrichter PWR11, PWR12, PWR21, PWR22 bzw. deren jeweilige Schaltelemente werden von einer jeweiligen Steuereinrichtung ASG11, ASG12, ASG21, ASG22 gesteuert, welche wiederum von der zentralen Steuereinrichtung ZSG gesteuert werden. Die Antriebsmotoren AM des ersten Triebdrehgestells TDG1, die Stromrichter PWR11, PWR12, die Steuereinrichtungen ASG11, ASG12 sowie zumindest der Gleichspannungszwischenkreis ZK verwirklichen eine erste elektrodynamische Bremse EDB1, während die Antriebsmotoren AM des zweiten Triebdrehgestells TDG2, die Stromrichter PWR21, PWR22, die Steuereinrichtungen ASG21, ASG202 sowie wiederum zumindest der Gleichspannungszwischenkreis ZK eine zweite elektrodynamische Bremse EDB2 verwirklichen.

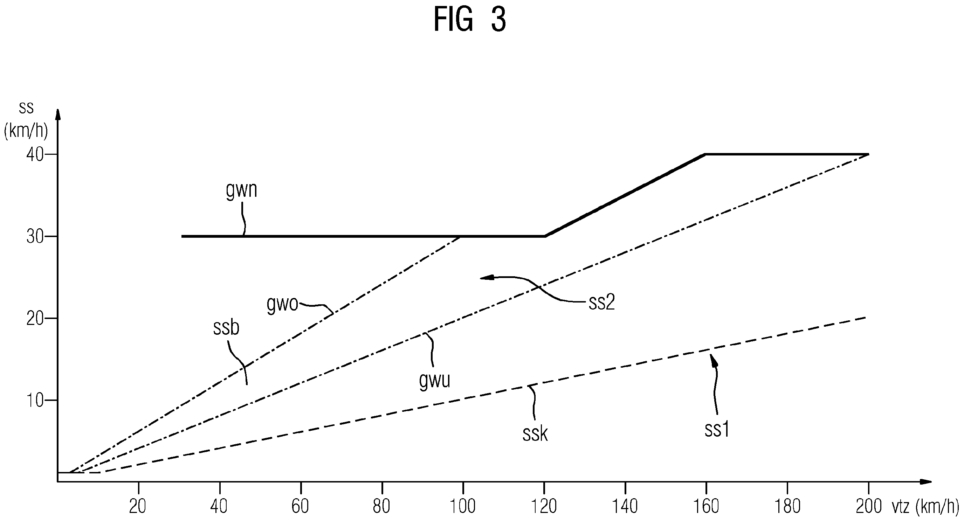

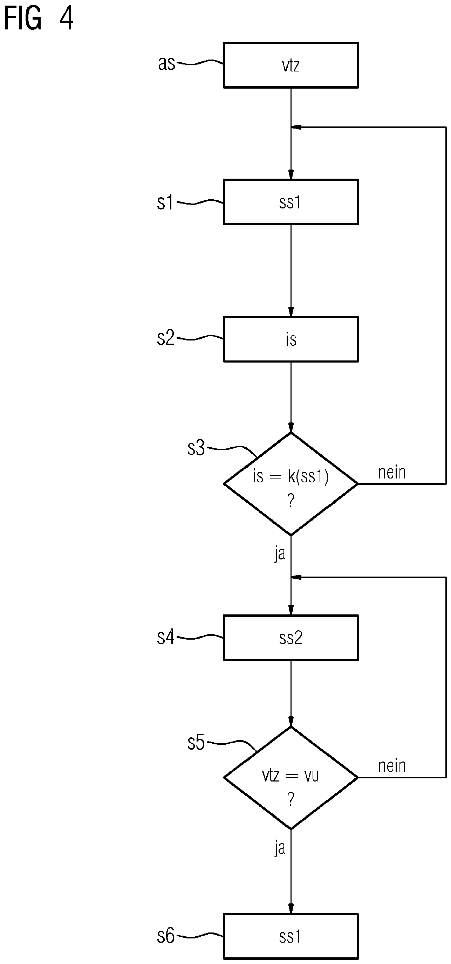

FIG 3 zeigt ein Diagramm zur Erläuterung des nachfolgend bezüglich FIG 4 beschriebenen Verfahrens zum Steuern der elektrodynamischen Bremse bzw. Bremsen des beispielhaften Triebzugs TZ der FIG 1. Auf der horizontalen Achse des Diagramms ist die Geschwindigkeit vtz des Triebzugs TZ in der Einheit km/h aufgetragen, wobei die Geschwindigkeit auf den Bereich von 0 bis 200 km/h beschränkt ist. Demgegenüber ist auf der vertikalen Achse des Diagramms der Sollschlupf ss als Differenzgeschwindigkeit in der Einheit km/h aufgetragen.

Die obere durchgehende Linie in dem Diagramm gibt die in Kap. 5.4.3.1 der vorstehend bereits genannten europäischen Norm EN 15595 definierten Grenzwerte gwn für den Absolut-Schlupf an, wobei der Absolut-Schlupf bei einer Geschwindigkeit des Triebzugs TZ zwischen 30 km/h und 120 km/h nicht mehr als 30 km/h, bei einer Geschwindigkeit zwischen 120 km/h bis 160 km/h nicht mehr als 25 Prozent, und bei einer Geschwindigkeit über 160 km/h nicht mehr als 40 km/h betragen darf.

Die untere gestichelte Linie in dem Diagramm gibt eine vorgegebene Sollschlupfkennlinie ssk an. Diese definiert von der Geschwindigkeit vtz des Triebzugs TZ abhängige Werte für den Sollschlupf ss, welche bei Einleitung und für die Dauer einer Bremsung mittels der elektrodynamischen Bremse EDB1, EDB2 des Triebzugs TZ verwendet werden. Beispielhaft sind die Werte der Sollschlupfkennlinie ssk, bis auf einen Bereich niedriger Geschwindigkeiten, proportional zu der Geschwindigkeit vtz gewählt, wobei bei einer Geschwindigkeit vtz von 100 km/h der Sollschlupf ss beispielsweise einen Wert von 10 km/h und bei einer Geschwindigkeit von 200 km/h einen Wert von 20 km/h hat. Die Werte des Sollschlupfes ss der Sollschlupfkennlinie ssk entsprechen somit 10 Prozent der jeweiligen Geschwindigkeit vtz des Triebzugs TZ. In der Praxis ist die vorgegebene Sollschlupfkennlinie nicht wie dargestellt konstant proportional zu der Geschwindigkeit steigend ausgestaltet, sondern kann in jeweiligen bestimmten Geschwindigkeitsbereichen auch höhere oder niedrigere Werte annehmen.

Ergänzend sind in dem Diagramm zwei strichpunktierte Linien angegeben, wobei die obere Linie obere Grenzwerte gwo und die untere Linie untere Grenzwerte gwu für den Sollschlupf ss angeben. Zusammen definieren die oberen gwo und unteren Grenzwerte gwu einen Sollschlupfbereich ssb, innerhalb dessen der Sollschlupf ss gewählt und variiert werden kann. Die Grenzwerte gwu der unteren Linie entsprechen beispielhaft 20 Prozent der jeweiligen Geschwindigkeit vtz des Triebzugs TZ. Demgegenüber entsprechen die Grenzwerte gwo der oberen Linie bis zu einer Geschwindigkeit von 100 km/h zunächst 30 Prozent der jeweiligen Geschwindigkeit vtz des Triebzugs TZ, für Geschwindigkeiten vtz oberhalb von 100 km/h folgt die obere Linie bzw. folgen die oberen Grenzwerte gwo hingegen den von der Norm EN 15595 vorgegebenen Grenzwerten gwn. Bei einer Geschwindigkeit vtz des Triebzugs von 160 km/h kann der Sollschlupf ss bzw. die Differenzgeschwindigkeit somit zwischen 32 km/h als dem unteren Grenzwert gwu und 40 km/h als dem oberen Grenzwert gwo, bei einer Geschwindigkeit vtz von 100 km/h kann der Sollschlupf ss entsprechend zwischen 20 km/h als unterem Grenzwert gwu und 30 km/h als oberem Grenzwert gwo variiert werden.

FIG 4 zeigt ein Ablaufdiagramm eines Verfahrens zum Steuern der elektrodynamischen Bremsen EDB1, EDB2 des beispielhaften Triebzugs TZ der FIG 1 bei einem Bremsvorgang unter Verwendung der Sollschlupfkennlinie ssk und des Sollschlupfbereichs ssb der FIG 3. Die nachfolgend beschriebenen Schritte des Verfahrens betrachten dabei allein die erste elektrodynamische Bremse EDB1 des Triebzugs TZ, für die zweite elektrodynamische Bremse EDB2 des Triebzugs TZ gelten diese Schritte jedoch entsprechend.

Als beispielhafte Ausgangssituation as bewegt sich der Triebzug TZ mit einer aktuellen Geschwindigkeit vtz von 160 km/h und soll mittels der elektrodynamischen Bremsen EDB1, EDB2 bis auf eine Geschwindigkeit von 80 km/h innerhalb einer vorgegebenen Strecke abgebremst werden. Der Bremsvorgang wird beispielsweise von einer den Triebzug TZ steuernden Person oder automatisiert von der zentralen Steuereinrichtung ZSG eingeleitet. Von der zentralen Steuereinrichtung ZSG wird die erforderliche Verzögerung zu der ersten Steuereinrichtung ASG1 signalisiert, welche diese Verzögerung durch Erzeugung von Bremsmomenten der Antriebsmotoren AM mittels einer jeweils geeigneten Ansteuerung der Schaltelemente des ersten Stromrichters PWR1 umsetzt.

Der ersten Steuereinrichtung ASG1 wird ergänzend die aktuelle Geschwindigkeit vtz des Triebzugs TZ von der zentralen Steuereinrichtung ZSG signalisiert, wobei die Geschwindigkeit vtz beispielsweise auf Basis von Signalen von Drehzahlgebern an einem oder beiden Radsätzen RS des Laufdrehgestells LDG des Triebzugs TZ bestimmt wird oder von nicht dargestellten weiteren zentralen Geschwindigkeitsbestimmungseinrichtungen, welche beispielsweise satellitengestützt und/oder mittels Radarsensoren eine aktuelle Geschwindigkeit des Triebzugs TZ bestimmen, bereitgestellt wird.

In einem ersten Schritt s1 des Verfahrens steuert die erste Steuereinrichtung ASG1 die Schaltelemente des ersten Stromrichters PWR1 unter Berücksichtigung des zu der aktuellen Geschwindigkeit vtz von 160 km/h des Triebzugs TZ korrespondierenden ersten Sollschlupfwertes ss1 gemäß der vorgegebenen Sollschlupfkennlinie ssk, welche in einer Speichereinrichtung der ersten Steuereinrichtung ASG1 gespeichert ist. Nach der Sollschlupfkennline ssk der FIG 3 beträgt der Wert des Sollschlupfes ss bei dieser Geschwindigkeit 16 km/h. Abhängig von der Geschwindigkeitsreduktion vtz aufgrund der generierten Bremsmomente der Antriebsmotoren AM und des sich dadurch gemäß der Sollschlupfkennlinie ssk ändernden ersten Sollschlupfwertes ss1 passt die erste Steuereinrichtung ASG1 nachfolgend die Steuerung der Schaltelemente des ersten Stromrichters PWR1 an.

In einem zweiten Schritt s2 bestimmt die erste Steuereinrichtung ASG1 während des Bremsvorgangs einen jeweiligen Istschlupf is der beiden Radsätze RS des ersten Triebdrehgestells TDG1. Hierzu werden der ersten Steuereinrichtung ASG1 Signale von beispielsweise Drehzahlgebern an den Radsätzen RS oder Antriebsmotoren AM zugeführt, anhand derer die erste Steuereinrichtung ASG1 eine aktuelle Geschwindigkeit der Radsätze RS bestimmt. Anhand der signalisierten aktuellen Geschwindigkeit vtz des Triebzugs TZ sowie der bestimmten aktuellen Geschwindigkeit des bzw. der Radsätze RS bestimmt die erste Steuereinrichtung ASG1 eine aktuelle Differenzgeschwindigkeit bzw. den aktuellen Istschlupf is.

In einem dritten Schritt s3 vergleicht die erste Steuereinrichtung ASG1 den bestimmten Istschlupf is, insbesondere den höheren Wert der beiden Radsätze RS oder einen Mittelwert der bestimmten Istschlupfe is, mit einem vorgegebenen Kriterium k. Dieses Kriterium k entspricht beispielsweise einem für eine bekannte Gleitschutzeinrichtung für die elektrodynamische Bremse eines Schienenfahrzeugs gewählten Kriterium, wobei das Kriterium beispielsweise ein Übersteigen des vorgegebenen ersten Sollschlupfes ss1 um einen bestimmten prozentualen Anteil oder einen bestimmten Betrag sowie gegebenenfalls ergänzend ein Andauern dieses Übersteigens über einen vorgegebenen Zeitraum definiert.

Erfüllt der bestimmte Istschlupf is bei beispielsweise einer aktuellen Geschwindigkeit vtz des Triebzugs TZ von 120 km/h das vorgegebene Kriterium k, Zweig ja, steuert die erste Steuereinrichtung ASG1 die Schaltelemente des ersten Stromrichters PWR1 anschließend unter Berücksichtigung eines zweiten Sollschlupfwertes ss2. Dieser zweite Sollschlupfwert ss2 wird von der ersten Steuereinrichtung ASG1 aus dem vorgegebenen Sollschlupfbereich ssb gewählt, wie er in FIG 3 angegeben ist. Der Sollschlupfbereich ssb weist für die Geschwindigkeit von 120 km/h einen oberen Grenzwert gwo für den zweiten Sollschlupf ss2 von 30 km/h, welcher von der Norm EN 15595 nach vorstehender Beschreibung vorgegeben ist, und einen unteren Grenzwert gwu von 24 km/h auf. Innerhalb des von den Grenzwerten gwo, gwu definierten Sollschlupfbereichs ssb variiert die erste Steuereinrichtung ASG1 den zweiten Sollschlupf ss2. Die Variation des zweiten Sollschlupfes ss2 durch die erste Steuereinrichtung ASG1 erfolgt dabei sinusförmig, insbesondere mit einer Frequenz zwischen einschließlich 0.1 Hz und einschließlich 10 Hz, bis zum Erreichen der Geschwindigkeit von 80 km/h.

Soll der Triebzug TZ gemäß einem alternativen Beispiel in dem Bremsvorgang nicht nur bis auf eine Geschwindigkeit von 80 km/h, sondern bis zum Stillstand abgebremst werden, so kann das Verfahren mit einem fünften Schritt s5 weitergeführt werden, in welchem die aktuelle Geschwindigkeit vtz des Triebzugs TZ mit einer bestimmten unteren Geschwindigkeit vu während des Bremsvorgangs verglichen wird. Bei Erreichen dieser unteren Geschwindigkeit vu von beispielsweise 10 km/h, Zweig ja, beendet die erste Steuereinrichtung ASG1 die Variation des zweiten Sollschlupfes ss2 innerhalb des Sollschlupfbereichs ssb und wechselt in einem sechsten Schritt s6 wieder zu dem ersten Sollschlupf ss1 gemäß der Sollschlupfkennlinie ssk bis zum Abschluss des Bremsvorgangs.

## Patentansprüche

1. Verfahren zum Steuern einer elektrodynamischen Bremse (EDB1, EDB2) eines Schienenfahrzeugs (TZ), wobei die elektrodynamische Bremse (EDB1, EDB2) zumindest einen Radsatz (RS), einen den Radsatz antreibenden elektrischen Antriebsmotor (AM), einen den Antriebsmotor (AM) steuernden Stromrichter (PWR1, PWR2, PWR11) sowie eine den Stromrichter (PWR1, PWR2, PWR11, PWR12, PWR21, PWR22) steuernde Steuereinrichtung (ASG1, ASG2) umfasst,
mit zumindest den Schritten:
- Steuern des Stromrichters (ASG1, ASG2) abhängig von einem vorgegebenen ersten Sollschlupf (ss1) für den Radsatz, wobei der erste Sollschlupf abhängig von einer Geschwindigkeit (vtz) des Schienenfahrzeugs (TZ) definiert ist,
- Bestimmen eines Istschlupfes (is) des Radsatzes (RS), und
- Vergleichen des bestimmten Istschlupfes (is) mit einem von dem vorgegebenen ersten Sollschlupf (ss1) abhängigen Kriterium (k),
**gekennzeichnet durch** den weiteren Schritt
- Steuern, abhängig von einem Ergebnis des Vergleichs, des Stromrichters (ASG1, ASG2) abhängig von einem zweiten Sollschlupf (ss2), wobei der zweite Sollschlupf (ss2) innerhalb eines vorgegebenen Sollschlupfbereichs (ssb) zeitlich variiert wird, wobei der Sollschlupfbereich (ssb) durch obere und untere Grenzwerte (gwo, gwu) für den Sollschlupf (ss) definiert ist und wobei die oberen und unteren Grenzwerte (gwo, gwu) jeweils abhängig von der Geschwindigkeit (vtz) des Schienenfahrzeugs (TZ) definiert sind.

2. Verfahren nach Anspruch 1, **dadurch gekennzeichnet, dass** die oberen und unteren Grenzwerte (gwo, gwu) des Sollschlupfbereichs (ssb) derart gewählt werden, dass sie jeweils einen höheren Schlupf als der erste Sollschlupf (ss1) definieren.

3. Verfahren nach Anspruch 1 oder 2, **dadurch gekennzeichnet, dass**
die oberen und unteren Grenzwerte (gwo, gwu) des Sollschlupfbereichs (ssb) derart gewählt werden, dass sie zumindest in einem bestimmten Geschwindigkeitsbereich jeweils proportional zu der Geschwindigkeit (vtz) des Schienenfahrzeugs (TZ) sind.

4. Verfahren nach einem der vorstehenden Ansprüche, **dadurch gekennzeichnet, dass**
der zweite Sollschlupf (ss2) periodisch variiert wird, insbesondere mit einer Frequenz zwischen einschließlich 0.1 Hz und einschließlich 10 Hz.

5. Verfahren nach Anspruch 4, **dadurch gekennzeichnet, dass** der zweite Sollschlupf (ss2) sinusförmig variiert wird.

6. Elektrodynamische Bremse (EDB1, EDB2) für ein Schienenfahrzeug (TZ), umfassend zumindest einen Radsatz (RS), einen den Radsatz antreibenden elektrischen Antriebsmotor (AM), einen den Antriebsmotor (AM) steuernden Stromrichter (PWR1, PWR2) sowie eine den Stromrichter (PWR1, PWR2) steuernde Steuereinrichtung (ASG1, ASG2), wobei die elektrodynamische Bremse (EDB1, EDB2) ausgestaltet ist,
- den Stromrichter (ASG1, ASG2) abhängig von einem vorgegebenen ersten Sollschlupf (ss1) für den Radsatz (RS) zu steuern, wobei der erste Sollschlupf (ss1) abhängig von einer Geschwindigkeit (vtz) des Schienenfahrzeugs (TZ) definiert ist,
- einen Istschlupf (is) des Radsatzes (RS) zu bestimmen, und
- den bestimmten Istschlupf (is) mit dem vorgegebenen ersten Sollschlupf (ss1) zu vergleichen,
und **dadurch gekennzeichnet ist, dass**
- die Steuereinrichtung (ASG1, ASG2) ausgestaltet ist, abhängig von einem Ergebnis des Vergleichs, den Stromrichter (PWR1, PWR2) abhängig von einem zweiten Sollschlupf (ss2) zu steuern, wobei die Steuereinrichtung (ASG1, ASG2) den zweiten Sollschlupf (ss2) innerhalb eines vorgegebenen Sollschlupfbereichs (ssb) zeitlich variiert, wobei der Sollschlupfbereich (ssb) durch obere und untere Grenzwerte (gwo, gwu) für den Sollschlupf (ss) definiert ist und wobei die oberen und unteren Grenzwerte (gwo, gwu) jeweils abhängig von der Geschwindigkeit (vtz) des Schienenfahrzeugs (TZ) definiert sind.

7. Elektrodynamische Bremse (EDB1, EDB2) nach Anspruch 6, **dadurch gekennzeichnet, dass**
die Steuereinrichtung (ASG1, ASG2) ferner ausgestaltet ist, den zweiten Sollschlupf (ss2) periodisch zu variieren, insbesondere mit einer Frequenz zwischen einschließlich 0.1 Hz und einschließlich 10 Hz.

8. Elektrodynamische Bremse (EDB1, EDB2) nach Anspruch 7, **dadurch gekennzeichnet, dass**
die Steuereinrichtung (ASG1, ASG2) ferner ausgestaltet ist, den zweiten Sollschlupf (ss2) sinusförmig zu variieren.

9. Schienenfahrzeug (TZ), umfassend zumindest eine elektrodynamische Bremse (EDB1, EDB2) nach einem der Ansprüche 6 bis 8.

10. Schienenfahrzeug (TZ) nach Anspruch 9, **dadurch gekennzeichnet, dass**
es als ein Triebzug für eine Fahrgastbeförderung in einem Nahverkehr, Regionalverkehr oder Fernverkehr oder als eine Lokomotive ausgestaltet ist.

11. Verwendung einer elektrodynamischen Bremse (EDB1, EDB2) nach einem der Ansprüche 6 bis 8 in einem Schienenfahrzeug (TZ), insbesondere in einem Triebzug für die Personenbeförderung oder einer Lokomotive.
